# EUROPEAN PATENT APPLICATION

(11) **EP 3 135 939 A1**
(43) Date of publication of application: **01.03.2017**
(21) Application number: 16185420.3
(22) Date of filing: 24.08.2016
(51) Int. Cl.: F16D 3/38, F16D 3/84

(54) **AN ADDITIONAL EMBODIMENT IN CARDAN SHAFT SLIDING GROUP**

(30) Priority: 25.08.2015 TR 201510486
(71) Applicant: Tirsan Kardan Sanayi Ve Ticaret Anonim Sirketi, 45030 Manisa (TR)
(72) Inventor: KORUK, ADNAN, 45030 Manisa (TR); BASARAN, AYÇA, 45030 Manisa (TR); TASAN, KORKUT, 45030 Manisa (TR); ÖZBAKIS, MURAT, 45030 Manisa (TR)
(74) Representative: Dereligil, Ersin

(57) **Abstract**

The invention is an improvement for preventing entrance of impurity among the elements that allow axial motion in cardan shaft sliding assy (1) and protecting the sliding assy (1) and its elements, and it is characterized in that; it comprises an outer sealing ring assembly (11) in order to ensure said impermeability.

## Description

### Technical Field

The invention relates to an embodiment added for preventing entrance of impurity among the elements that allow axial motion in cardan shaft sliding assy and protecting the sliding assy and its elements.

### State of the Art

In the prior art, sealing rings having various geometries are used in order to prevent impurity from entering among yoke shaft and tube sleeve elements in cardan shaft sliding assy. However, these sealing rings cannot complete their service life as expected due to the effects of materials, sealing ring geometries, or heavy operating conditions, and as a result, allow entrance of impurity into the sliding assy and therefore may cause abrasion, vibration, noise etc. unwanted situations in the sliding assy. This situation has necessitated use of additional protecting elements and scraper elements for impurity in the sliding assy.

In the literature, one of the patents about this subject is the Japanese patent application No. JP2002187444. In the relevant application, a protective cover for cardan shaft is disclosed. Another application is the Japanese Patent Application No. JPH02154814. In this application, a dual cover embodiment is disclosed. The problem solved by this embodiment is providing a continuous assembly by obtaining simultaneous motion.

As a result, the above said drawbacks and the inadequacy of the prior art solutions in the literature about the subject have necessitated an improvement in the related technical field.

### Purpose of the Invention

With the addition of the **additional protective cover** and **outer sealing ring** according to the invention, the expected service life of the inner sealing ring is also increased and more precise protection is achieved.

Sealing rings used in cardan shafts that operate under cold climate, hard terrain, and dirty and challenging conditions such as construction areas become non-functional in short time. By means of integrating the components according to the invention to already present sliding groups, loss of function in inner sealing ring lips due to abrasion will be reduced, and thus cardan shaft service life will be extended, and maintenance and repair costs will be minimized.

The invention provides more effective protection than standard sealing rings used in the state of the art cardan shafts. This is because, impurity coming from outside will be scraped simultaneously by both the inner and the outer sealing rings. The outer sealing ring is made of a rougher and harder material and directly plays role in the first scraping operation under heavy operating conditions, since it is directly exposed to the external environment. On the other hand, the additional protective sheet material enables movement of the outer sealing ring on the Protective cover, and similarly, protects the sliding group components with higher performance compared to the state of the art sealing ring assemblies. The invention does not lose its scraping characteristic according to the completely open and completely closed states of the cardan shaft, and the amount of opening in the yoke shaft and the Tube sleeve. The design of additional protective cover is made by considering this situation. Due to its length compensation characteristic and being made of metal sheet material, it can provide higher performance even under heavy operating conditions compared to the bellows components used in the state of the art applications for the same function. By means of preventing impurity from entering into the assembly, it allows the sliding group to have a long service life.

The primary purpose of the invention is to provide more effective protection.

Another purpose of the invention is to provide a sealing ring embodiment that is exposed to the external environment and compatible with heavy/challenging operating conditions, and providing the first scraping operation by said thick sealing ring.

A similar purpose of the invention is to extend the service life of the inner sealing ring by means of performing said first scraping by this thick sealing ring.

In order to achieve the above said purposes, the invention comprises a sliding assy, a spline profile, a yoke shaft, a Tube sleeve, a protective cover, an inner sealing ring, an additional Protective cover, a protective cover protrusion, a sealing ring stop, a Tube sleeve groove, an outer sealing ring assembly, a support sheet, and a scraper lip.

### Figures for Better Understanding of the Invention

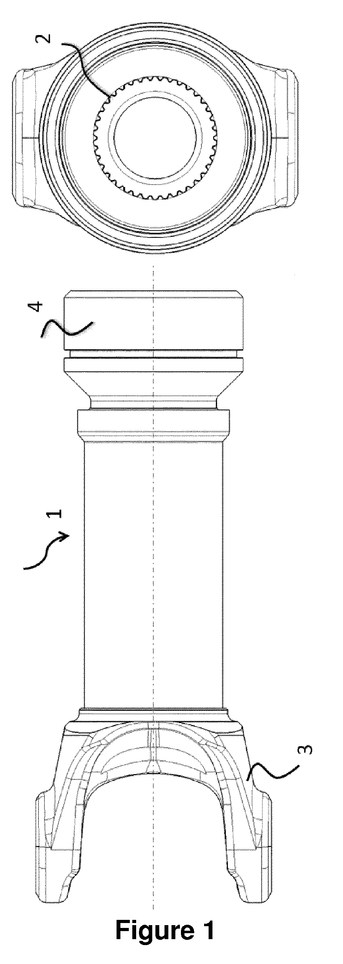

Figure 1 shows a side view and a bottom view of the cardan shaft.

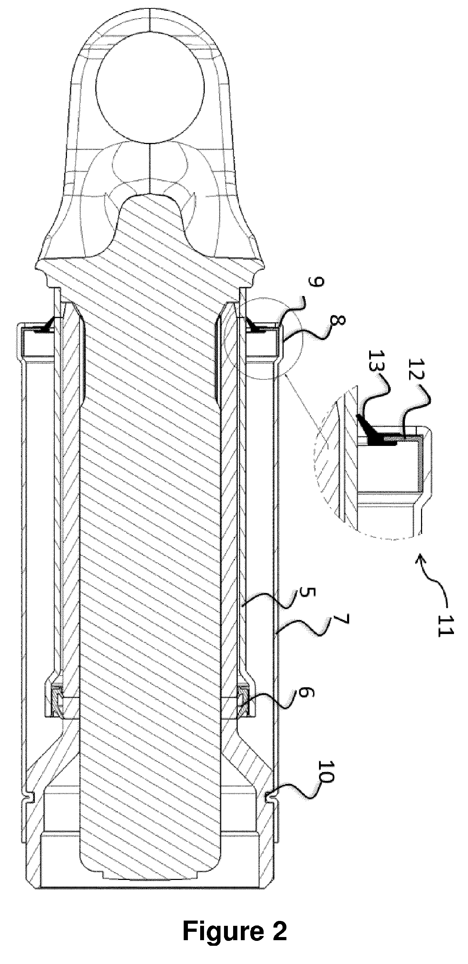

Figure 2 shows a section view of the cardan shaft and a detailed view of the sealing ring according to the invention.

Components which are identical at least widely identical or which have at least widely identical functions are shown with the same number.

### Description of Parts References

1. Sliding assy
2. Spline profile
3. Yoke shaft
4. Tube sleeve
5. Protective cover
6. Inner sealing ring
7. Additional protective cover
8. Protective cover protrusion
9. Sealing ring stop
10. Tube sleeve groove
11. Outer sealing ring assembly
12. Support sheet
13. Scraper lip

### Detailed Description of the Invention

In this detailed description, the preferred embodiments of an Additional Embodiment in Cardan Shaft Sliding Group according to the invention is only disclosed for better understanding of the subject without forming any limiting effect.

In cardan shafts, axial motion is obtained by means of elements called as sliding assy (1), consisting of a male and a female spline profile (2), respectively, and enabling sliding on top of each other as a yoke shaft (3) and a Tube sleeve (4). Use of a sealing ring between two elements for the purpose of providing impermeability is quite common in the prior art applications. This sealing ring prevents the grease found among the sliding assy (1) elements and forms resistance against the external environment. After a yoke shaft (3) and a Tube sleeve (4) are mounted to each other, a Protective cover (5) and an inner sealing ring (6) integrated in this Protective cover (5) are fitted onto the yoke shaft (3). Assembly of the Protective cover (5) onto the yoke shaft (3) can be made via welding or crushing. A pipe adjusted according to the outer diameter of the tube sleeve (4) component is fixed onto the Tube sleeve (4) via crushing operation in order to form the additional Protective cover (7). For this purpose, a Tube sleeve groove (10) is found on the Tube sleeve (4). A Protective cover protrusion (8) is formed in order to allow insertion of the outer sealing ring assembly (11) into the inner part of the additional Protective cover (7) and to prevent sliding of the additional Protective cover (7) and the Tube sleeve (4) towards the direction they are combined. Similarly, the sealing ring stop (9) is covered over the outer sealing ring assembly (11) via spinning method.

## Claims

1. The invention is an improvement for preventing entrance of impurity among the elements that allow axial motion in cardan shaft sliding assy (1) and protecting the sliding assy (1) and its elements, and it is **characterized in that**; it comprises an outer sealing ring assembly (11) in order to ensure said impermeability.

2. A claim according to Claim 1, **characterized in that**; said outer sealing ring assembly (11) comprises a support sheet (12) and a scraper lip (13).

3. A claim according to Claim 1, **characterized in that**; said outer sealing ring assembly (11) comprises an additional Protective cover (7) positioned outside thereon.
